# EUROPEAN PATENT SPECIFICATION

(11) **EP 3 384 813 B1**
(45) Date of publication and mention of the grant of the patent: **26.02.2020**
(21) Application number: 18163926.1
(22) Date of filing: 26.03.2018
(51) Int. Cl.: A47J 27/00

(54) **COOKING VESSEL FOR AN INDUCTION COOKING HOB**
KOCHGEFÄSS FÜR EIN INDUKTIONSKOCHFELD
RÉCIPIENT DE CUISSON POUR TABLE DE CUISSON PAR INDUCTION

(30) Priority: 03.04.2017 EP 17164544
(43) Date of publication of application: 10.10.2018
(73) Proprietor: ELECTROLUX APPLIANCES AKTIEBOLAG, 105 45 Stockholm (SE)
(72) Inventor: VIROLI, Alex, 47122 Forli (IT); JEANNETEAU, Laurent, 47122 Forli (IT)
(74) Representative: Electrolux Group Patents

(56) References cited:
- EP-A1- 2 916 432
- WO-A1-2013/098016
- JP-A- 2003 275 097
- US-A1- 2004 149 736
- US-A1- 2009 065 496
- US-A1- 2010 147 832
- US-A1- 2012 132 646

## Description

The present invention relates to a cooking vessel for an induction cooking hob according to the preamble of claim 1. Further, the present invention relates to a system comprising an induction cooking hob and at least one cooking vessel.

On an induction cooking hob the heat is generated in the bottom of the cooking vessel. Usually, the cooking vessel is directly placed on the induction cooking hob, so that the cooking panel is also heated up with dispersion of energy from said cooking vessel. This may be a risk for the user.

EP 2 916 432 A1 discloses an electrical device adapted to be placed on an induction cooking hob. Said electrical device comprises a receiving coil for receiving power from an induction coil of the induction cooking hob. An electric load is electrically coupled to said receiving coil. A shielding portion is arranged between the receiving coil and the electric load in order to protect said electric load against electromagnetic radiation from the induction coil.

It is an object of the present invention to provide a cooking vessel for an induction cooking hob, which avoids that the cooking panel of the induction cooking hob is heated up.

The object is achieved by the cooking vessel for the induction cooking hob according to claim 1.

According to the present invention
- the cooking vessel comprises an inner container,
- the cooking vessel comprises at least one thermostat connected to the receiving coil and to the electric heating element,
- the thermostat is arranged beneath the bottom wall of the inner container, and
- the thermostat disconnects the electric heating element from the receiving coil, if the temperature at the bottom wall of the inner container exceeds a temperature threshold value.

The electric heating element of the cooking vessel is indirectly supplied by the induction coil of the induction cooking hob via the receiving coil. The thermostat interrupts the circuit formed by the receiving coil, the electric heating element and the thermostat, if a temperature threshold value has been exceeded. Said temperature threshold value either may be a fixed value or may be adjustable by the user. In the latter case, an adjusting knob or the like may be arranged at the cooking vessel. Different cooking vessels may be provided for various cooking modes by setting the temperature threshold value of the thermostat. Further, the thermostat contributes to a safe operation of the cooking vessel.

In particular, the outer container is made of at least one thermally insulating material. Additionally, or alternatively, the inner container is made of at least one thermally conducting material. Preferably, a bottom wall of the inner container is spaced from a bottom wall of the outer container.

Preferably, the outer container of the cooking vessel is made of thermally insulating material. Additionally or alternatively, it is preferred that the inner container is made of thermally conducting material. This advantageously allows that the outer side of said cooking vessel is non-essentially heated up. The user can touch the cooking vessel without risk of being burned. The cooking panel may be made of material with low heat resistance. The thermostat allows an automatic control of the cooking vessel and the cooking process.

Further, the receiving coil may be arranged above the bottom wall of the outer container. Additionally or alternatively, preferably the at least one electric heating element is arranged beneath the bottom wall of the inner container.

Moreover, the thermostat is arranged beneath the bottom wall of the inner container.

The thermostat disconnects the electric heating element from the receiving coil, if the temperature at the bottom wall of the inner container exceeds the temperature threshold value.

For example, the temperature threshold value of the thermostat is a fixed predetermined value. In this case, the cooking vessel may be provided for a certain cooking mode.

Alternatively, the temperature threshold value of the thermostat may be adjustable by a user, wherein preferably said thermostat includes an adjusting knob.

Further, a side wall of the inner container may be spaced from a side wall of the outer container, wherein an intermediate space between said side walls is filled with at least one insulating material. For example, said intermediate space may be filed with air, inert gas and/or solid insulating material.

In a similar way, an intermediate space between the bottom wall of the inner container and a bottom wall of the outer container is filled with at least one insulating material.

Moreover, the cooking vessel may comprise at least one temperature sensor arranged beneath the bottom wall of the inner container. The temperature sensor allows a further control of the cooking vessel and the cooking process.

Additionally, the cooking vessel comprises at least one RFID transmitter electrically connected to the temperature sensor, wherein preferably said RFID transmitter is provided for sending temperature data detected by the temperature sensor. Said RFID transmitter operates without any battery. Alternatively, a radio transmitter, e.g. Bluetooth, supplied by a battery is used. Said battery is rechargeable by a dedicated charging circuit arranged inside the cooking vessel, wherein the charging circuit takes energy from the induction coil.

For example, the RFID transmitter is arranged within a handle of the cooking vessel.

Furthermore, the RFID transmitter may include an electronic key for identifying the cooking vessel or properties of said cooking vessel.

In particular, the outer container is made of plastics. For example, the outer container is made of polypropylene. Additionally or alternatively, it is preferred that the inner container is made of metal, preferably aluminium or stainless steel.

Further, the present invention relates to a system comprising an induction cooking hob and at least one cooking vessel, wherein the system comprises at least one cooking vessel mentioned above.

Preferably, the induction cooking hob comprises at least one induction coil arranged marginally beneath a cooking panel.

For example, the cooking panel may be made of at least one material, which has a heat resistance lower than 50°C.

Moreover, the induction cooking hob may comprise at least one RFID reader for receiving temperature data sent by the RFID transmitter of the cooking vessel.

At last, the RFID reader may be arranged in the centre of the induction cooking hob. In this case, one RFID reader is sufficient for receiving signals from all positions on the induction cooking hob.

Novel and inventive features of the present invention are set forth in the appended claims.

The present invention will be described in further detail with reference to the drawings, in which
- FIG 1: illustrates a schematic sectional side view of a cooking vessel according to a preferred embodiment of the present invention, and
- FIG 2: illustrates a schematic top view of an induction cooking hob with the cooking vessel according to the preferred embodiment of the present invention.

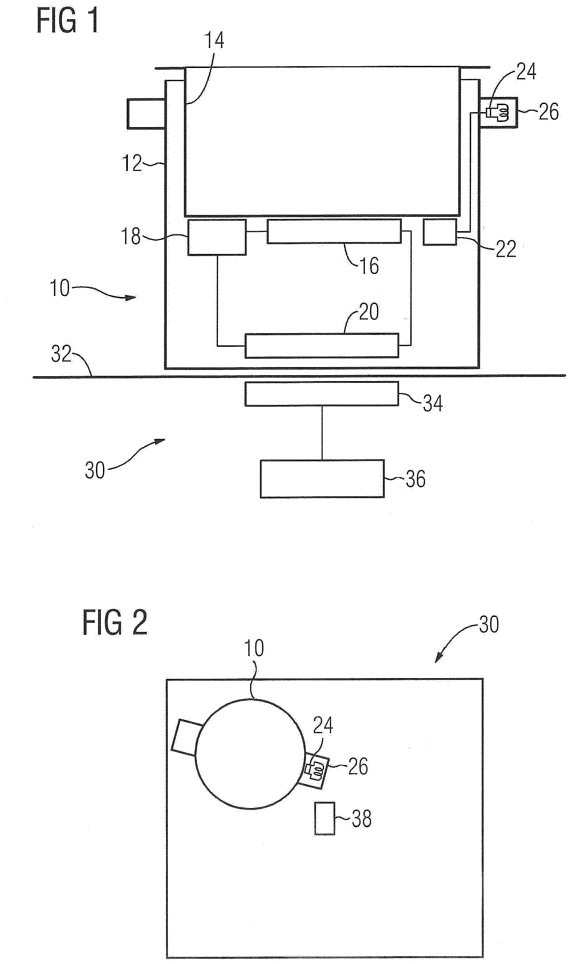

FIG 1 illustrates a schematic sectional side view of a cooking vessel 10 according to a preferred embodiment of the present invention. The cooking vessel 10 is placed on an induction cooking hob 30.

The cooking vessel 10 comprises an outer container 12 and an inner container 14. The outer container 12 includes a bottom wall, a side wall and an open top side. In a similar way, the inner container 14 includes a bottom wall, a side wall and an open top side. The inner container 14 is arranged within the outer container 12. The side wall of the outer container 12 encloses the side wall of the inner container 14. The side walls of the outer container 12 and inner container 14 are marginally spaced from each other. The outer container 12 is made of a thermally insulating material. For example, the outer container 12 is made of plastics. The outer container 12 made of plastics allows a plurality of design for the cooking vessel 10. The inner container 14 is made of a thermally conducting material. For example, the inner container 14 is made of metal, preferably aluminium or stainless steel. The inner container 14 is provided for receiving food to be prepared. Optionally, the inner surface of the inner container 14 includes a non-stick coating.

The bottom walls of the outer container 12 and inner container 14 are spaced from each other. An electric heating element 16, a thermostat 18 and a receiving coil 20 are arranged between the bottom walls of the outer container 12 and inner container 14. For example, the electric heating element 16 is a resistive heating element. The electric heating element 16 and the thermostat 18 are arranged beneath the bottom wall of the inner container 14, while the receiving coil 20 is arranged above the bottom wall of the outer container 12. The electric heating element 16, the thermostat 18 and the receiving coil 20 are connected in series and form a closed circuit.

Further, the cooking vessel 10 comprises a temperature sensor 22 and an RFID transmitter 24. The temperature sensor 22 is arranged beneath the bottom wall of the inner container 14, while the RFID transmitter 24 is arranged within a handle 26 of the cooking vessel 10. The temperature sensor 22 is electrically connected to the RFID transmitter 24. In this example, the RFID transmitter 24 is arranged within a handle 26 of the cooking vessel 10.

The induction cooking hob 30 comprises a cooking panel 32, at least one induction coil 34 and at least one induction generator 36. In this example, one induction coil 34 and one induction generator 36 are shown. The induction generator 36 is electrically connected to the induction coil 34. The induction generator 36 provides the induction coil 34 with an alternating current. For example, the frequency of said alternating current is between 20 kHz and 100 kHz.

When the induction coil 34 is activated by the induction generator 36, then energy in form of a magnetic field is transferred from the induction coil 34 of the induction cooking hob 30 to the receiving coil 20 of the cooking vessel 10. The induction coil 34 of the induction cooking hob 30 acts as a transmitting coil 34. In other words, the induction coil 34 of the induction cooking hob 30 and the receiving coil 20 of the cooking vessel 10 form a transformer, wherein the induction coil 34 acts as primary coil, while the receiving coil 20 acts as secondary coil. The receiving coil 34 injects an electric current into the circuit formed by the electric heating element 16, the thermostat 18 and the receiving coil 20. The electric heating element 16 generates heat, which is conducted to the inner container 14. The electric heating element 16 is arranged in the proximity of the bottom wall of the inner container 14.

The thermostat 18 is arranged in contact with the bottom wall of the inner container 14. The thermostat 18 interrupts the circuit formed by the electric heating element 16, the thermostat 18 and the receiving coil 20, if a temperature threshold value has been exceeded. Said temperature threshold value either may be a fixed value or may be adjustable by the user. In the latter case, an adjusting knob or the like may be arranged at the cooking vessel 10. Different cooking vessels 10 may be provided for various cooking modes by setting the temperature threshold value of the thermostat 18. For example, a cooking vessel 10 for heating up milk requires another temperature threshold value than a cooking vessel 10 for grilling meat. Further, the temperature threshold value of the thermostat 18 may be set in such a way that ignition of fire by oil or fat is avoided.

The thermally insulating material of the outer container 12 effects a thermal insulation between the inner container 14 and the food on the one hand and the cooking panel 32 and the environment on the other hand. Moreover, the air between the outer container 12 and the inner container 14 contributes to the thermal insulation mentioned above. Optionally, at least one further insulating material may be arranged between the outer container 12 and the inner container 14 in order to increase the thermal insulation. In particular, the thermally insulating material of the outer container 12 prevents that the cooking panel 32 is heated up. In this case, the cooking panel 32 may be made of alternative materials, e.g. wood.

FIG 2 illustrates a schematic top view of the induction cooking hob 30 with the cooking vessel 10 according to the preferred embodiment of the present invention.

The cooking vessel 10 is placed above an induction coil 34 of the induction cooking hob 30. The RFID transmitter 24 is arranged within the handle 26 of the cooking vessel 10. The RFID transmitter 24 includes an RFID integrated circuit and an antenna. The RFID transmitter 24 is electrically connected to the temperature sensor 22 arranged beneath the bottom wall of the inner container 14. The temperature sensor 22 detects the temperature of the bottom wall of the inner container 14.

An RFID reader 38 is arranged at or in the environment of the induction cooking hob 30. In this example, the RFID reader 38 is arranged in the centre of the induction cooking hob 30. Preferably, the RFID reader 38 is arranged beneath the cooking panel 32. Temperature data detected by the temperature sensor 22 are sent by the RFID transmitter 24 and received by the RFID reader 38. The RFID reader 38 is connected to a control unit of the induction cooking hob 30, so that the induction coil 34 beneath the cooking vessel 10 is controllable. By this way, the temperature at the bottom wall of the inner container 14 and factually the temperature within the inner container 14 can be controlled.

Further, the RFID transmitter 24 may include an electronic key. Before starting the induction generator 36, a read operation may be performed by the RFID reader 38. If the RFID reader 38 and/or the control unit identify the electronic key of the RFID transmitter 24 as valid, then the cooking process can be started. Otherwise, an error signal is indicated. The electronic key allows a checking, if the cooking vessel 10 is suitable for the induction cooking hob 30, the corresponding heating zone and/or the designated cooking process.

The system described above may be used for other appliances than cooking vessels 10. Said appliance requires the receiving coil 20 in order to receive magnetic energy from the induction coil 34 of the induction cooking hob 30. The receiving coil 20 of said appliance may be connected to an arbitrary electric device. For example, said appliance may be a kettle, a rice cooker, a kitchen mixer, a kitchen scale, a small oven, a cooling device, e.g. including Peltier cells, a battery charger and /or a lamp.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### List of reference numerals

- 10: cooking vessel
- 12: outer container
- 14: inner container
- 16: electric heating element, resistive heating element
- 18: thermostat
- 20: receiving coil
- 22: temperature sensor
- 24: RFID transmitter
- 26: handle
- 30: induction cooking hob
- 32: cooking panel
- 34: induction coil, transmitting coil
- 36: induction generator
- 38: RFID reader

## Claims

1. A cooking vessel (10) for an induction cooking hob (30), wherein:
- the cooking vessel (10) comprises an outer container (12),
- the cooking vessel (10) comprises at least one receiving coil (20),
- the cooking vessel (10) comprises at least one electric heating element (16) connected to the receiving coil (20), and
- the receiving coil (20) is adapted for transferring a magnetic field from an induction coil (34) of an induction cooking hob (30) to an alternating current, **characterised in that**
- the cooking vessel (10) comprises an inner container (14),
- the cooking vessel (10) comprises at least one thermostat (18) connected to the receiving coil (20) and to the electric heating element (16),
- the thermostat (18) is arranged beneath the bottom wall of the inner container (12), and
- the thermostat (18) disconnects the electric heating element (16) from the receiving coil (20), if the temperature at the bottom wall of the inner container (12) exceeds a temperature threshold value.

2. The cooking vessel according to claim 1,
**characterised in that**
the outer container (12) is made of at least one thermally insulating material and the inner container (14) is made of at least one thermally conducting material, wherein preferably the bottom wall of the inner container (14) is spaced from a bottom wall of the outer container (12).

3. The cooking vessel according to claim 2,
**characterised in that**
the receiving coil (20) is arranged above the bottom wall of the outer container (12), while preferably the at least one electric heating element (16) is arranged beneath the bottom wall of the inner container (12).

4. The cooking vessel according to any one of the preceding claims,
**characterised in that**
the temperature threshold value of the thermostat (18) is a fixed predetermined value or is adjustable by a user, wherein preferably said thermostat (18) adjustable by the user includes an adjusting knob.

5. The cooking vessel according to any one of the preceding claims,
**characterised in that**
a side wall of the inner container (14) is spaced from a side wall of the outer container (12), wherein an intermediate space between said side walls is filled with at least one insulating material.

6. The cooking vessel according to any one of the preceding claims,
**characterised in that**
an intermediate space between the bottom wall of the inner container (14) and a bottom wall of the outer container (12) is filled with at least one insulating material.

7. The cooking vessel according to any one of the preceding claims,
**characterised in that**
the cooking vessel (10) comprises at least one temperature sensor (22) arranged beneath the bottom wall of the inner container (12).

8. The cooking vessel according to claim 7,
**characterised in that**
the cooking vessel (10) comprises at least one RFID transmitter (24) electrically connected to the temperature sensor (22), wherein said RFID transmitter (24) is provided for sending temperature data detected by the temperature sensor (22).

9. The cooking vessel according to claim 8,
**characterised in that**
the RFID transmitter (24) is arranged within a handle of the cooking vessel (10).

10. The cooking vessel according to claim 8 or 9,
**characterised in that**
the RFID transmitter (24) includes an electronic key for identifying the cooking vessel (10) or properties of said cooking vessel (10).

11. The cooking vessel according to any one of the preceding claims,
**characterised in that**
the outer container (12) is made of plastics, while the inner container (14) is made of metal, preferably aluminium or stainless steel.

12. A system comprising an induction cooking hob (30) and at least one cooking vessel (10),
**characterised in that**
the system comprises at least one cooking vessel (10) according to any one of the preceding claims, wherein preferably the induction cooking hob (30) comprises at least one induction coil (34) arranged marginally beneath a cooking panel (32).

13. The system according to claim 12,
**characterised in that**
the cooking panel (32) is made of at least one material, which has a heat resistance lower than 50°C.

14. The system according to any one of the claims 12 or 13,
**characterised in that**
the induction cooking hob (30) comprises at least one RFID reader (38) for receiving temperature data sent by the RFID transmitter (24) of the cooking vessel (10).

15. The system according to any one of the claims 12 to 14,
**characterised in that**
the RFID reader (38) is arranged in the centre of the induction cooking hob (30).

## Patentansprüche

1. Kochgefäß (10) für ein Induktionskochfeld (30), wobei:
- das Kochgefäß (10) einen äußeren Behälter (12) umfasst,
- das Kochgefäß (10) zumindest eine Empfangsspule (20) umfasst,
- das Kochgefäß (10) zumindest ein elektrisches Heizelement (16) umfasst, das mit der Empfangsspule (20) verbunden ist, und
- die Empfangsspule (20) angepasst ist zum Übertragen eines Magnetfelds von einer Induktionsspule (34) eines Induktionskochfelds (30) in einen Wechselstrom,
**dadurch gekennzeichnet, dass**
- das Kochgefäß (10) einen inneren Behälter (14) umfasst,
- das Kochgefäß (10) zumindest ein Thermostat (18) umfasst, das mit der Empfangsspule (20) und dem elektrischen Heizelement (16) verbunden ist,
- das Thermostat (18) unter der untersten Wand des inneren Behälters (12) angeordnet ist, and
- das Thermostat (18) das elektrische Heizelement (16) von der Empfangsspule (20) trennt, wenn die Temperatur an der untersten Wand des inneren Behälters (12) einen Temperaturschwellenwert überschreitet.

2. Kochgefäß nach Anspruch 1,
**dadurch gekennzeichnet, dass**
der äußere Behälter (12) aus zumindest einem thermisch isolierenden Material gefertigt ist und der innere Behälter (14) aus zumindest einem thermisch leitfähigen Material gefertigt ist, wobei vorzugsweise die unterste Wand des inneren Behälters (14) von einer untersten Wand des äußeren Behälters (12) beabstandet ist.

3. Kochgefäß nach Anspruch 2,
**dadurch gekennzeichnet, dass**
die Empfangsspule (20) über der untersten Wand des äußeren Behälters (12) angeordnet ist, wobei vorzugsweise das zumindest eine elektrische Heizelement (16) unter der untersten Wand des inneren Behälters (12) angeordnet ist.

4. Kochgefäß nach einem der vorhergehenden Ansprüche,
**dadurch gekennzeichnet, dass**
der Temperaturschwellenwert des Thermostats (18) ein fester vorbestimmter Wert ist oder durch einen Benutzer einstellbar ist, wobei vorzugsweise das durch den Benutzer einstellbare Thermostat (18) einen Einstellknopf umfasst.

5. Kochgefäß nach einem der vorhergehenden Ansprüche,
**dadurch gekennzeichnet, dass**
eine Seitenwand des inneren Behälters (14) von einer Seitenwand des äußeren Behälters (12) beabstandet ist,
wobei ein Zwischenraum zwischen den Seitenwänden mit zumindest einem isolierenden Material gefüllt ist.

6. Kochgefäß nach einem der vorhergehenden Ansprüche,
**dadurch gekennzeichnet, dass**
ein Zwischenraum zwischen der untersten Wand des inneren Behälters (14) und einer untersten Wand des äußeren Behälters (12) mit zumindest einem isolierenden Material gefüllt ist.

7. Kochgefäß nach einem der vorhergehenden Ansprüche,
**dadurch gekennzeichnet, dass**
das Kochgefäß (10) zumindest einen Temperatursensor (22) umfasst, der unter der untersten Wand des inneren Behälters (12) angeordnet ist.

8. Kochgefäß nach Anspruch 7,
**dadurch gekennzeichnet, dass**
das Kochgefäß (10) zumindest einen RFID-Sender (24) umfasst, der elektrisch mit dem Temperatursensor (22) verbunden ist, wobei der RFID-Sender (24) zum Senden von durch den Temperatursensor (22) detektierten Temperaturdaten bereitgestellt wird.

9. Kochgefäß nach Anspruch 8,
**dadurch gekennzeichnet, dass**
der RFID-Sender (24) im Inneren eines Griffs des Kochgefäßes (10) angeordnet ist.

10. Kochgefäß nach Anspruch 8 oder 9,
**dadurch gekennzeichnet, dass**
der RFID-Sender (24) einen elektronischen Schlüssel zum Identifizieren des Kochgefäßes (10) oder von Eigenschaften des Kochgefäßes (10) umfasst.

11. Kochgefäß nach einem der vorhergehenden Ansprüche,
**dadurch gekennzeichnet, dass**
der äußere Behälter (12) aus Kunststoff gefertigt ist, während der innere Behälter (14) aus Metall, vorzugsweise Aluminium oder Edelstahl, gefertigt ist.

12. System, umfassend ein Induktionskochfeld (30) und zumindest ein Kochgefäß (10),
**dadurch gekennzeichnet, dass**
das System zumindest ein Kochgefäß (10) nach einem der vorhergehenden Ansprüche umfasst, wobei vorzugsweise das Induktionskochfeld (30) zumindest eine Induktionsspule (34) umfasst, die marginal unter der Kochplatte (32) angeordnet ist.

13. System nach Anspruch 12,
**dadurch gekennzeichnet, dass**
die Kochplatte (32) aus zumindest einem Material gefertigt ist, das eine Wärmebeständigkeit niedriger als 50 °C aufweist.

14. System nach einem der Ansprüche 12 oder 13,
**dadurch gekennzeichnet, dass**
das Induktionskochfeld (30) zumindest einen RFID-Leser (38) zum Empfangen von durch den RFID-Sender (24) des Kochgefäßes (10) gesendeten Temperaturdaten umfasst.

15. System nach einem der Ansprüche 12 bis 14,
**dadurch gekennzeichnet, dass**
der RFID-Leser (38) in der Mitte des Induktionskochfelds (30) angeordnet ist.

## Revendications

1. Récipient de cuisson (10) pour table de cuisson par induction (30) :
- le récipient de cuisson (10) comprenant un récipient extérieur (12),
- le récipient de cuisson (10) comprenant au moins une bobine de réception (20),
- le récipient de cuisson (10) comprenant au moins un élément chauffant électrique (16) connecté à la bobine de réception (20), et
- la bobine de réception (20) étant adaptée pour transformer un champ magnétique provenant d'une bobine d'induction (34) d'une table de cuisson par induction (30) en courant alternatif,
**caractérisé en ce que**
- le récipient de cuisson (10) comprend un récipient intérieur (14),
- le récipient de cuisson (10) comprend au moins un thermostat (18) connecté à la bobine de réception (20) et à l'élément chauffant électrique (16),
- le thermostat (18) est agencé au-dessous de la paroi inférieure du récipient intérieur (12), et
- le thermostat (18) déconnecte l'élément chauffant électrique (16) de la bobine de réception (20) si la température au niveau de la paroi inférieure du récipient intérieur (12) dépasse une valeur seuil de température.

2. Récipient de cuisson selon la revendication 1, **caractérisé en ce que** le récipient extérieur (12) est réalisé à partir d'au moins un matériau d'isolation thermique et le récipient intérieur (14) est réalisé à partir d'au moins un matériau thermoconducteur, la paroi inférieure du récipient intérieur (14) étant de préférence espacée d'une paroi inférieure du récipient extérieur (12).

3. Récipient de cuisson selon la revendication 2, **caractérisé en ce que** la bobine de réception (20) est agencée au-dessus de la paroi inférieure du récipient extérieur (12), alors que ledit au moins un élément chauffant électrique (16) est de préférence agencé au-dessous de la paroi inférieure du récipient intérieur (12).

4. Récipient de cuisson selon l'une quelconque des revendications précédentes, **caractérisé en ce que** la valeur seuil de température du thermostat (18) est une valeur prédéterminée fixe ou est réglable par un utilisateur, dans lequel ledit thermostat (18) réglable par l'utilisateur comprend de préférence un bouton de réglage.

5. Récipient de cuisson selon l'une quelconque des revendications précédentes, **caractérisé en ce qu'**une paroi latérale du récipient intérieur (14) est espacée d'une paroi latérale du récipient extérieur (12), un espace intermédiaire entre lesdites parois latérales étant comblé par au moins un matériau isolant.

6. Récipient de cuisson selon l'une quelconque des revendications précédentes, **caractérisé en ce qu'**un espace intermédiaire entre la paroi inférieure du récipient intérieur (14) et une paroi inférieure du récipient extérieur (12) est comblé par au moins un matériau isolant.

7. Récipient de cuisson selon l'une quelconque des revendications précédentes, **caractérisé en ce que** le récipient de cuisson (10) comprend au moins un capteur de température (22) agencé au-dessous de la paroi inférieure du récipient intérieur (12).

8. Récipient de cuisson selon la revendication 7, **caractérisé en ce que** le récipient de cuisson (10) comprend au moins un émetteur RFID (24) électriquement connecté au capteur de température (22), ledit émetteur RFID (24) étant prévu pour envoyer des données de température détectées par le capteur de température (22).

9. Récipient de cuisson selon la revendication 8, **caractérisé en ce que** l'émetteur RFID (24) est agencé à l'intérieur d'une poignée du récipient de cuisson (10).

10. Récipient de cuisson selon la revendication 8 ou 9, **caractérisé en ce que** l'émetteur RFID (24) comprend une clé électronique pour identifier le récipient de cuisson (10) ou des propriétés dudit récipient de cuisson (10).

11. Récipient de cuisson selon l'une quelconque des revendications précédentes, **caractérisé en ce que** le récipient extérieur (12) est réalisé en matière plastique alors que le récipient intérieur (14) est réalisé en métal, de préférence en aluminium ou en acier inoxydable.

12. Système comprenant une table de cuisson par induction (30) et au moins un récipient de cuisson (10), **caractérisé en ce que** le système comprend au moins un récipient de cuisson (10) selon l'une quelconque des revendications précédentes, dans lequel la table de cuisson par induction (30) comprend de préférence au moins une bobine d'induction (34) agencée au bord au-dessous d'une plaque de cuisson (32).

13. Système selon la revendication 12, **caractérisé en ce que** la plaque de cuisson (32) est réalisée à partir d'au moins un matériau présentant une résistance thermique inférieure à 50 °C.

14. Système selon l'une quelconque des revendications 12 ou 13, **caractérisé en ce que** la table de cuisson par induction (30) comprend au moins un lecteur RFID (38) pour recevoir des données de température envoyées par l'émetteur RFID (24) du récipient de cuisson (10).

15. Système selon l'une quelconque des revendications 12 à 14, **caractérisé en ce que** le lecteur RFID (38) est agencé au centre de la table de cuisson par induction (30).
